# EUROPÄISCHE PATENTSCHRIFT

(11) **EP 0 743 133 B1**
(45) Veröffentlichungstag und Bekanntmachung des Hinweises auf die Patenterteilung: **10.10.2001**
(21) Anmeldenummer: 96105986.2
(22) Anmeldetag: 17.04.1996
(51) Int. Cl.: B23K 37/04, B23K 26/08, B23K 26/02

(54) **Verfahren und Vorrichtung zum Verbinden von zwei metallischen Werkstücken**
Method and apparatus for joining two metallic workpieces
Procédé et dispositif pour joindre deux pièces métalliques

(30) Priorität: 15.05.1995 CH 140795
(43) Veröffentlichungstag der Anmeldung: 20.11.1996
(73) Patentinhaber: ELPATRONIC AG, 8962 Bergdietikon (CH)
(72) Erfinder: Aebersold, Hans, 8903 Birmensdorf (CH); Urech, Werner, 8434 Kaiserstuhl (CH); Gross, Norbert, CH-8422 Pfungen (CH)

(56) Entgegenhaltungen:
- EP-A- 0 258 454
- EP-A- 0 452 137
- EP-A- 0 522 811
- EP-A- 0 565 846
- US-A- 5 328 083
- PATENT ABSTRACTS OF JAPAN vol. 011, no. 215 (M-606), 11.Juli 1987 & JP-A-62 033083 (KAWASAKI STEEL CORP), 13.Februar 1987,

## Beschreibung

Die Erfindung betrifft eine Vorrichtung zum Verbinden von zwei Werkstücken durch Schweissen, wobei die Werkstücke auf Auflageflächen liegen, insbesondere stumpf mit Randkanten unter Ausbildung einer Stossfuge aneinander stossen oder überlappend angeordnet sind und andererseits der Auflageflächen mit Druck beaufschlagt sind.

Zum Verbinden von zwei Werkstücken, insbesondere bei der Herstellung von Karosserieteilen im Automobilbau, sind verschiedene Schweissverfahren bekannt. Zu erwähnen ist hier vor allem das Laserschweissen, wo die Blechteile in Stumpflage zu Platinen verschweisst werden. Andere Schweissverfahren mit Überlappung liegen aber auch im Bereich der Erfindung.

Ein Laser-Schweissvorgang spielt sich in der Regel wie folgt ab:

Die Werkstücke werden paarweise, ohne vorbereitete Kanten, in Stumpflage und ohne wesentliche Seitendruck positioniert und durch Klemmelemente fixiert. Hier findet eine erste Kraftbeeinflussung der Werkstücke statt. Jetzt können die Werkstücke weiterbehandelt, beispielsweise wie in der EP-A 0 565 846 beschrieben, geglättet werden, um die Stossfuge auf das zulässige Mass zu schliessen. Diese Weiterbehandlung bewirkt eine zweite Kraftbeeinflussung der Positionierung, wo erhebliche Seitenkräfte auftreten können. Schlussendlich kommt es infolge von Wärmespannungen beim Laserschweissen zu weiteren, insbesondere seitlich wirkenden Krafteinflüssen.

Wichtig ist vor allem das Abfangen von auftretenden Seitenkräften. Findet beispielsweise eine Vorbehandlung durch Glätten bzw. Profilieren entsprechend der EP-A 0 565 846 statt, so beträgt die dabei auftretende durchschnittliche, d.h. über die Länge der Schweissnaht gemittelte (horizontale) Seitenkraft bis zu 30 N/mm. Durch Wärmespannungen tritt beim Schweissen eine zusätzliche durchschnittliche Seitenkraft von 20 N/mm auf, die es gilt abzufangen. Das bedeutet, dass auf ein Werkstück von ca. 1600 mm Länge ein (vertikaler) Klemmdruck von ca.10 t wirken muss. Um einen derartigen Druck auf die Werkstücke aufzubringen, bedarf es grosser Druckantriebe und -elemente sowie massiver Strukturen. Diese benötigen aufwendige Stahlkonstruktionen und grössere Motoren, sofern sie beispielsweise beweglich ausgestaltet sind. Hierdurch kommt es wiederum zu Strukturproblemen in der Maschine und diese erreicht eine Grösse und Schwere, die beim Aufstellen berücksichtigt werden muss.

Eine naheliegende Möglichkeit der Verbesserung der Festlegung der Werkstücke besteht darin, die Oberflächen von Maschinentisch und/oder Druckelementen mit Reibbelägen zu versehen, die den Reibungskoeffizienten erhöhen. Diese Verbesserung ist aber nur begrenzt möglich, ferner sind solche Reibbeläge sehr verschmutzungsanfällig, wobei gerade beim Laserschweissen fetthaltiger Staub z.B. durch nachträgliches Kühlen mit Öl od.dgl. entsteht.

*EP 522 811 zeigt eine Vorrichtung zum Verschweissen von Blechplatten mit* mehreren *Schweisseinheiten, welche zugleich je einen Abschnitt der Stossfuge verschliessen*. *Dabei wird das Problem einer v-förmig während dem Schweissprozess sich öffnenden Stossfuge gelöst, womit eine Klemmung durch höchste Klemmkräfte zur Beibehaltung der parallelen Lage der Kanten entällt. Dies ermöglicht, die Fixierung der Bleche nur durch* *Magnete, oder, alternativ, durch herkömmliche mechanische Klemmittel vorzusehen.*

*EP 258 454 zeigt eine Vorrichtung zum Verschweissen von Metallstreifen einer Dicke von zB 0*,*1mm*. *Die Klemmung in der Schweisstelle erfolgt zwischen Klemmen 17,18 und einem Haltebalken 15. Während dem Positioniervorgang sind Magnete 7 bis 9 und 18*,*19 aktiv. Grosse Seitenkräfte sind bei solch einer Vorrichtung nicht vorhanden.*

*Der vorliegenden Erfindung liegt die Aufgabe zugrunde, ein Verfahren und eine Vorrichtung der o.g. Art zu entwickeln, mittels denen auftretende Seitenkräfte abgefangen werden und eine Festlegung der Werkstücke beim Verbinden bei gleichen oder sogar noch weniger massiven Strukturen verbessert wird. Zur Lösung dieser Aufgabe (Ansprüche 1 und 6) führt, dass die Werkstücke einerseits durch Druck und, kumulativ, mit einer magnetischen Kraft beaufschlagt werden, was den Reibschluss für die Fixierung überproprtional erhöht und damit eine Lage der zu verschweissenden Platinen für qualitativ einwandfreie Naht sicherstellt.*

Die Werkstücke werden einerseits auf einen Maschinentisch gedrückt und andererseits, *am gleichen Ort,* von diesem magnetisch angezogen. Damit wirken auf die Werkstücke zwei unterschiedliche Kräfte, die sich jedoch nicht addieren, sondern, überraschenderweise, die Haltekraft für das Werkstück überproportional erhöhen. Damit wird ein Verrutschen der Werkstücke beim Schweissvorgang ausgeschlossen. Eine Erhöhung des Klemmdrucks und damit die entsprechende massive Struktur der Maschine entfällt.

Ferner ist es denkbar, die magnetische Feldstärke über die Länge des Werkstückes unterschiedlich auszulegen. Das bedeutet, dass es beispielsweise möglich ist, das Werkstück etwa mittig stärker anzuziehen als in den Randbereichen, in denen wiederum die Druckelemente einen besseren Zugriff auf das Werkstück haben. Hier sind viele Möglichkeiten denkbar und sollen von der Erfindung umfasst sein.

Eine einfache Vorrichtung zur Durchführung des Verfahrens weist zumindest ein Magnetelement in dem Maschinentisch auf, dem ein Druckelement zugeordnet ist. Bei dem Druckelement kann es sich um Randklammern handeln. Bevorzugt wird jedoch ein durchgehender Druckbalken, der entlang seiner gesamten Länge dem Werkstück aufliegt, verwendet.

Auch kann anstatt eines durchgehenden Magnetelementes eine Mehrzahl von Einzelelementen nebeneinander angeordnet sein.

Bei dünnen Blechen, beispielsweise von 1 - 4 mm Dicke, kann es sein, dass die Feldlinien durch das Blech durchschlagen. Deshalb kann zwischen dem Druckelement und dem Blech eine weitere Schicht aus vorzugsweise ferromagnetischem Werkstoff vorgesehen werden, wodurch eine optimale Ausbildung des Magnetfelds und eine maximale Wirkung gewährleistet ist. Ebenso kann das Druckelement selbst, soweit es auf dem Blech aufliegt, aus ferromagnetischem Werkstoff bestehen.

Auch ist daran gedacht, die nebeneinanderliegenden Werkstücke mit einer unterschiedlichen magnetischen Ausrichtung zu beaufschlagen. Das bedeutet, dass sich diese Werkstücke gerade im Bereich einer Schweissfuge anziehen, so dass hierdurch die Schweissfugenbreite verringert wird. Dies verbessert insbesondere die Qualität der Schweissnaht.

Weiter ist es möglich, die Erfindung an einer Anordnung gemäss USA 5 328 083 zu realisieren, wo dann z.B. die Raupenglieder mit Magneten ausgestattet werden.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine schematisch dargestellte Draufsicht auf eine Vorrichtung zum Verbinden von zwei Werkstücken durch Laserschweissen;
Figur 2 eine schematisch dargestellte Seitenansicht der Vorrichtung gemäss Figur 1;
Figur 3 eine schematische Frontansicht zweier Werkstücke mit einer Variante eine Möglichkeit zum Verringern einer Stossfuge.
Figur 4 ein Querschnitt durch eine erfindungsgemässe Vorrichtung, welche einen Shuttle zum Verschweissen von mehreren Blechpaaren verwendet.
Figur 5 eine Draufsicht auf die Vorrichtung von Figur 4.

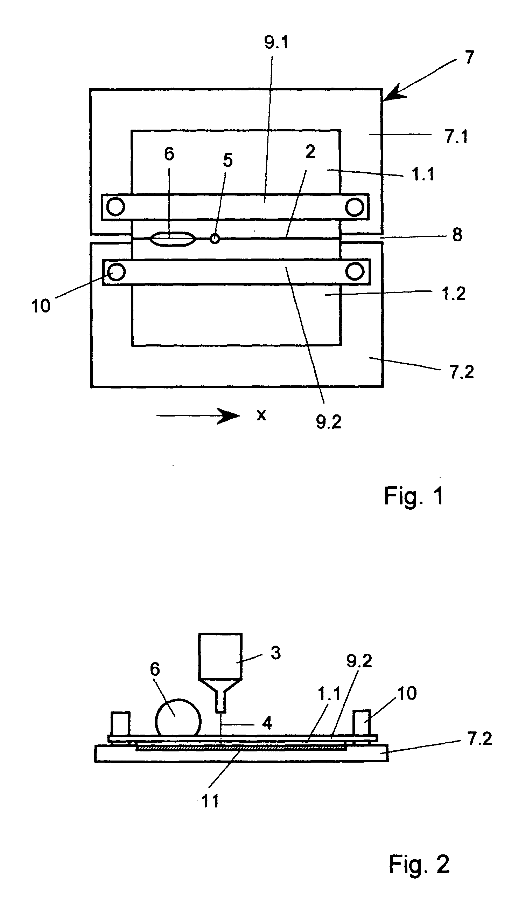

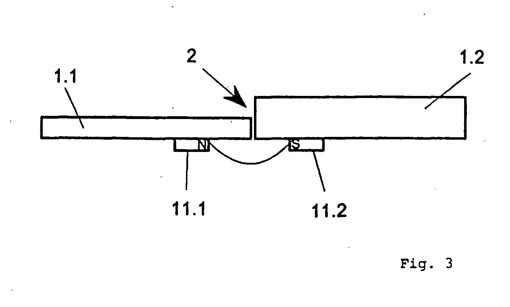

Gemäss Figur 1 sollen zwei Werkstücke 1. 1 und 1. 2 durch Schweissen, insbesondere durch Laserschweissen miteinander verbunden werden. Hierzu liegen beide Werkstücke 1.1 und 1.2 mit einer Randkante stumpf aneinander und bilden eine Stossfuge 2. Im Bereich der Stossfuge 2 werden die beiden Werkstücke 1.1 und 1.2 miteinander verbunden, wobei ein Laser 3 (siehe Figur 2) einen Laserstrahl 4 auf diese Stossfuge 2 richtet. In Figur 1 ist ein Auftreffpunkt 5 dargestellt.

Die beiden Werkstücke 1.1 und 1.2 werden gegenüber dem Laser 3 in Richtung x bewegt, wobei dem Laser 3 eine Profilrolle 6 vorgeschaltet ist, wie sie näher in der EP-A-0 565 846 beschrieben ist. Diese Profilrolle 6 erzeugt im Bereich der Stossfuge 2 eine Nut bzw. eine Verdrängung von Material zur Stossfuge 2 hin, wodurch die Breite der Stossfuge 2 minimiert wird. Dies wird auch als Glätten bezeichnet.

Beide Werkstücke 1.1 und 1.2 liegen auf einem Maschinentisch 7 auf, der im vorliegenden Fall zweigeteilt ausgebildet ist. Zwischen den beiden Maschinentischteilen 7.1 und 7.2 ist ein Spalt 8 gebildet, durch den auch der Laserstrahl 4 hindurchdringen kann.

Auf den Maschinentischteilen 7.1 und 7.2 sind die Werkstücke 1.1 und 1.2 festgespannt. Hierzu ist jeweils zumindest ein Druckbalken 9.1 und 9.2 vorgesehen, der über die gesamte Länge der Werkstücke 1.1 bzw. 1.2 möglichst gleichmässig drückt.

Der Druckbalken 9.1, 9.2 kann durch entsprechende Druckantriebe 10 beidends oder auf der Länge verteilt mit notwendigen Drücken beaufschlagt werden. Als Druckantriebe bieten sich beispielsweise hydraulische oder pneumatische Zylinder an. Denkbar sind aber auch elektrische oder mechanische Drukkelemente. Hier soll dem Erfindungsgedanken keine Grenze gesetzt sein.

Wesentlich bei der vorliegenden Erfindung ist, dass in dem Maschinentischteil 7.1 bzw. 7.2 zumindest ein Magnetelement 11 (siehe Fig. 2) eingebettet ist. Dieses Magnetelement 11 kann aus einer durchgehenden Platte bestehen, jedoch ist es auch denkbar, dass es aus einzelnen kleinen Elementen zusammengesetzt ist. Dabei ist ebenfalls denkbar, dass die einzelnen Elemente eine unterschiedliche Ausrichtung aufweisen, bzw. mit unterschiedlicher Magnetfeldstärke betrieben werden.

In einem weiteren Ausführungsbeispiel der Erfindung gemäss Figur 3 ist daran gedacht, dass die beiden Magnetelemente 11.1 und 11.2 im Maschinentischteil 7.1 und 7.2 eine unterschiedliche Ausrichtung aufweisen. Hierdurch besteht die Möglichkeit, die beiden Werkstücke 1.1 und 1.2 magnetisch so zu beeinflussen, dass im Bereich der Stossfuge 2 eine magnetische Kraft ausgeübt wird, welche die beiden Werkstücke 1.1 und 1.2 zusammenzieht, so dass die Breite der Stossfuge 2 verringert wird. Die Folge davon ist eine Schweissnahtverbesserung.

Praktische Versuche haben erwiesen, dass eine Haltekraft, die auf die Werkstücke 1.1 und 1.2 über den Druckbalken 9 und die Magnetelemente 11 ausgeübt wird, überproportional höher ist, als die Haltekraft des Druckbalkens oder der Magnetelemente allein. Es findet demnach keine Addition der Haltekraft sondern eine überproportionale Erhöhung statt. Hierdurch wird auch eine Welligkeit oder eine Verwerfung der Werkstücke 1.1 und 1.2 insbesondere nach dem Laserschweissen vermieden. Vor allem sind aber keine aufwendigen Konstruktionen und massiven Strukturen notwendig, um eine ausreichende Klemmkraft zu erzeugen.

Ferner wurde festgestellt, dass durch die gewählte Festlegung der Werkstücke 1.1 und 1.2 eine verbesserte Wärmeabfuhr stattfindet.

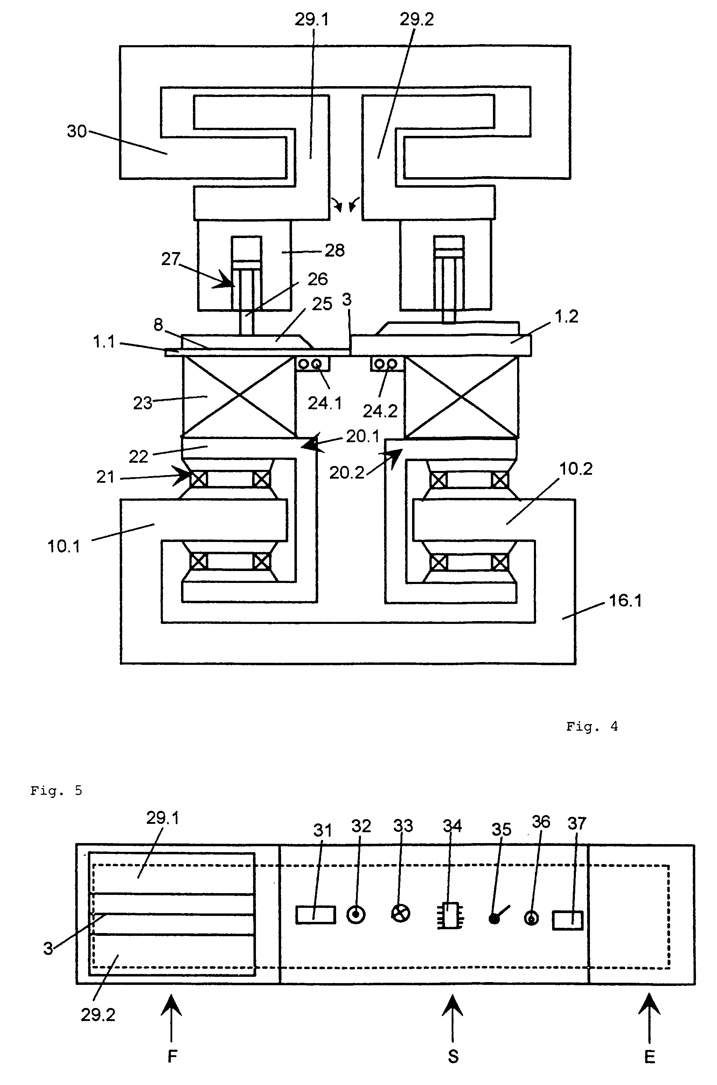

Figur 4 zeigt einen Querschnitt durch eine Vorrichtung zur Ausführung der Erfindung. Dargestellt ist ein Maschinenrahmen 16.1,30, wobei beim Rahmenabschnitt 16.1 die Schenkel 10.1 und 10.2 speziell bezeichnet sind. Am Rahmen läuft ein Aufspanntisch oder Shuttle 20, welcher über C-förmige Elemente 20.1, 20.2, 29.1, 29.2 am Rahmen 16.1,30 abgestützt ist. Magnete 23 bilden die Auflagefläche für die Bleche 1.1 und 1.2. Ein Pressschuhe 25 vorzugsweise aus ferromagnetischem Material wird durch Druckelemente 27 gegen die Bleche 1.1, 1.2 vorgespannt. Die Wirkung der Pressung aufgrund der Druckelement 27 sowie des Magnets 23 ergänzt sich überproportional, was zur Folge hat, dass die Anordnung überproportional grössere Seitenkräfte aufnehmen kann. Die Kühlkanäle 24.1 und 24.2 unterstützen den Wärmeabtransport aufgrund der Schweissung in der Fuge 3.

Gemäss Figur 5 ist erkennbar, dass der Shuttle, von dem lediglich die beiden Bügel 29.1 und 29.2 erkennbar sind, durch die gesamte Vorrichtung läuft. Im Augenblick befindet er sich in einer Beladestation F, von dieser gelangt er in eine Schweissstation S und aus dieser in eine Entladestation E, aus der die zusammengeschweissten Werkstücke entnommen werden.

In der Schweisstation findet bevorzugt ein Glätten der Stossfuge durch eine Glätteinrichtung 31 statt, wie dies in der EP-A 565 846 beschrieben ist. Auf die Glätteinrichtung 31 folgt bevorzugt eine Spaltüberprüfung 32, mit welcher ein nachfolgender Laserstrahl 2 dem Spaltverlauf nachgeführt werden kann.

Nach dem Verschweissen der Stossfuge durch den Laser 33 wird bevorzugt die Schweissnaht in einer Bürsteinrichtung 34 nachbehandelt und in einer Kühlstation 35 geölt. Darauf folgt eine Qualitätskontrolle 36 und ggfs. ein Nachglätten 37.

Alle diese Behandlungen durchlaufen die Werkstücke 1.1 und 1.2 eingespannt in dem Shuttle.

## Patentansprüche

1. Verfahren zum Verbinden von zwei Platinen mit einer Dicke von vorzugsweise 1 bis 4 mm, wobei die Platinen stumpf unter Ausbildung einer Stossfuge oder überlappend aneinandergelegt und im Bereich der Stossfuge bzw der Ueberlappstelle miteinander verschweisst werden, wobei die Platinen angesichts Seitenkräfte erzeugender Fügeoperationen zur Fixierung in ihrer vorbestimmten Lage durch klemmende Druckelemente auf dem Maschinentisch festgespannt werden
**dadurch gekennzeichnet,**
**dass** die Platinen zum Abfangen der Seitenkräfte zusätzlich von einer magnetischen Kraft beaufschlagt werden, welche die Platinen am Ort der durch die Druckelemente aufgebrachten Klemmkraft zusätzlich gegen ihre Einspannung zieht.

2. Verfahren nach Anspruch 1, **dadurch gekennzeichnet, dass** der Maschinentisch als Shuttle oder Glieder einer Raupenanordnung ausgebildet ist.

3. Verfahren nach einem der Ansprüche 1 - 2, **dadurch gekennzeichnet, dass** die magnetische Feldstärke über die Länge der Platinen unterschiedlich ausgelegt wird.

4. Verfahren nach einem der Ansprüche 1 bis 3, **dadurch gekennzeichnet, dass** die Werkstücke mit einer unterschiedlichen magnetischen Ausrichtung beaufschlagt werden.

5. Verfahren nach einem der Ansprüche 1 - 4, **dadurch gekennzeichnet, dass** Druckelemente magnetisch wirksam sind.

6. Vorrichtung zur Durchführung des Verfahrens nach einem der Ansprüche 1 - 4, mit Organen zur Durchführung der Fügeoperationen sowie einer Einrichtung zum Laserschweissen von Blechen, und einem Aufspanntisch oder einer Durchlaufanordnung für zu verschweissende Bleche, welche diese auch seitlich durch reibschlüssig wirkende Elemente führt, wobei der Aufspanntisch oder die Glieder der Durchlaufanordnung mindestens ein dem Werkstück zugeordnetes Magnetelement und, diesem zugeordnet, ein Druckelement aufweisen derart, dass sich die zum Reibschluss und Fixierung der Platinen in ihrer vorbestimmten lage führenden Komponenten von Druck- und Magnetkraft überlagern.

7. Vorrichtung nach Anspruch 6, **dadurch gekennzeichnet, dass** das zumindest eine Magnetelement (11) in einem Maschinentisch (7) eingebettet ist.

8. Vorrichtung nach einem der Ansprüche 6 bis 7, **dadurch gekennzeichnet, dass** das Magnetelement (11) aus einer Mehrzahl von Einzelelementen zusammengesetzt ist.

9. Vorrichtung nach Anspruch 8, **dadurch gekennzeichnet, dass** die Einzelelemente des Magnetelementes (11) eine unterschiedliche Feldstärke aufweisen.

10. Vorrichtung nach einem der Ansprüche 7 - 9, **dadurch gekennzeichnet, dass** das Druckelement (3) aus einem Druckbalken besteht, dem zumindest ein Druckantrieb (10) zugeordnet ist.

11. Vorrichtung nach einem der Ansprache 7 - 11, **dadurch gekennzeichnet, dass** das Druckelement (3) einen ferromagnetischen Werkstoff aufweist.

## Claims

1. Method for joining two blanks with a thickness of preferably 1 to 4 mm, in which the blanks are juxtaposed so as to form a butting or overlapping joint and are welded together in the region of the butt or overlap, and in which in order to fix the blanks in their predetermined position with a view to performing joining operations generating lateral forces, the blanks are clamped on the machine table by clamping pressure elements,
**characterized in that**
to counteract the lateral forces, the blanks are additionally acted on by a magnetic force which additionally draws the blanks towards their clamps at the point at which the clamping force is applied by the pressure elements.

2. Method according to Claim 1, **characterized in that** the machine table is formed as a shuttle or as links of an endless chain arrangement.

3. Method according to Claim 1 or 2, **characterized in that** the magnetic field intensity is made to vary over the length of the blanks.

4. Method according to any one of Claims 1 to 3, **characterized in that** the workpieces are acted on by different magnetic orientations.

5. Method according to any one of Claims 1 to 4, **characterized in that** pressure elements are magnetically active.

6. Apparatus for carrying out the method according to any one of Claims 1 to 4, with mechanisms for performing the joining operations and a laser welding device for metal sheets, and with a clamping table or continuous feed arrangement for sheets to be welded which guides the sheets, *inter alia* in the lateral direction, by means of frictionally engaging elements, wherein the clamping table has, or the links of the continuous feed arrangement have, at least one magnet element acting on the workpiece and a pressure element acting thereon so that the components of pressure and magnetic force producing the frictional engagement and fixing the blanks in their predetermined position are superimposed.

7. Apparatus according to Claim 6, **characterized in that** the at least one magnet element (11) is embedded in a machine table (7).

8. Apparatus according to Claim 6 or 7, **characterized in that** the magnet element (11) is made up of a plurality of individual elements.

9. Apparatus according to Claim 8, **characterized in that** the individual elements of the magnet element (11) have different field intensities.

10. Apparatus according to any one of Claims 7 to 9, **characterized in that** the pressure element (3) consists of a pressure beam acted on by at least one pressure drive (10).

11. Apparatus according to any one of speech 7 to 11, **characterized in that** the pressure element (3) consists of a ferromagnetic material.

## Revendications

1. Procédé pour réunir deux platines possédant une épaisseur comprise de préférence entre 1 et 4 mm, selon lequel on juxtapose les platines de manière qu'elles soient en aboutement en formant un joint vif ou bien en chevauchement, et on les réunit par soudage dans la zone du joint vif ou dans la zone de chevauchement, et selon lequel on serre fermement les platines sur la table de machine au moyen d'éléments de compression effectuant un serrage, en vue d'opérations d'assemblage produisant des forces latérales, pour les fixer dans leur position prédéterminée,
**caractérisé en ce que** pour absorber les forces latérales, on charger les platines par une force magnétique supplémentaire, qui tire les platines en supplément contre leur montage en fixation, à l'emplacement où la force de serrage est appliquée par les éléments de compression.

2. Procédé selon la revendication 1, **caractérisé en ce que** la table de machine est agencée sous la forme d'une navette ou de maillons d'un dispositif à chenille.

3. Procédé selon l'une des revendications 1 et 2,
**caractérisé en ce que** l'intensité de champ magnétique est réglée différemment sur la longueur des platines.

4. Procédé selon l'une des revendications 1 à 3,
**caractérisé en ce qu'**on charge les pièces à travailler avec des orientations magnétiques différentes.

5. Procédé selon l'une des revendications 1 à 4,
**caractérisé en ce que** les éléments de compression agissent magnétiquement.

6. Dispositif pour la mise en oeuvre du procédé selon l'une des revendications 1 à 4, comportant des organes pour exécuter des opérations d'assemblage ainsi qu'un dispositif pour le soudage par laser de tôles, et une table de serrage pour un dispositif de traversée pour les tôles à souder, qui guide ces dernières également latéralement au moyen d'éléments agissant selon une liaison à frottement, et dans lequel la table de serrage ou les maillons du dispositif à traverser comportant au moins un élément magnétique associé à la pièce à travailler et un élément de compression associé à cet élément magnétique, de telle sorte que les composantes, qui guident et fixent les platines dans leur position prédéterminée pour la liaison à frottement, de la force de compression et de la force magnétique se superposent.

7. Dispositif selon la revendication 6,
**caractérisé en ce que** ledit au moins un élément magnétique (11) est inséré dans une table de machine (7).

8. Dispositif selon l'une des revendications 6 et 7, **caractérisé en ce que** l'élément magnétique (11) est formé par l'assemblage d'une multiplicité d'éléments individuels.

9. Dispositif selon la revendication 8,
**caractérisé en ce que** les éléments individuels de l'élément magnétique (11) possèdent une intensité de champ différente.

10. Dispositif selon l'une des revendications 7 à 9, **caractérisé en ce que** l'élément de compression (30) est constitué par une barre de compression, à laquelle est associé au moins un dispositif d'entraînement de compression (10).

11. Dispositif selon l'une des revendications 7 à 11, **caractérisé en ce que** l'élément de compression (3) possède un matériau ferromagnétique.
